Europäisches Patentamt

European Patent Office

Office européen des brevets

(11) Veröffentlichungsnummer: **0 639 903 A2**

## (12) EUROPÄISCHE PATENTANMELDUNG

(21) Anmeldenummer: **94202276.5**

(22) Anmeldetag: **08.08.94**

(51) Int. Cl.⁶: **H04J 3/06**

(30) Priorität: **10.08.93 DE 4326771**

(43) Veröffentlichungstag der Anmeldung:
**22.02.95 Patentblatt 95/08**

(84) Benannte Vertragsstaaten:
**DE FR GB IT**

(71) Anmelder: **Philips Patentverwaltung GmbH**
**Wendenstrasse 35c**
**D-20097 Hamburg (DE)**
㊗ **DE**

(71) Anmelder: **PHILIPS ELECTRONICS N.V.**

**Groenewoudseweg 1**
**NL-5621 BA Eindhoven (NL)**
㊗ **FR GB IT**

(72) Erfinder: **Urbansky, Ralph, Dr.-Ing.**
**c/o Philips Patentverwalt. GmbH,**
**Wendenstrasse 35c**
**D-20097 Hamburg (DE)**

(74) Vertreter: **Volmer, Georg, Dipl.-Ing. et al**
**Philips Patentverwaltung GmbH,**
**Wendenstrasse 35c**
**D-20097 Hamburg (DE)**

(54) **Übertragungssystem.**

㊀ Die Erfindung bezieht sich auf ein Übertragungssystem mit einem Synchronisierer (1) zur Bildung eines plesiochronen oder synchronen Signals, mit wenigstens einer Vorrichtung (2, 3) zur Weiterleitung des Signals und mit einem Desynchronisierer (4). Der Desynchronisierer (4) enthält wenigstens einen Pufferspeicher (5) zur Zwischenspeicherung von im Signal enthaltenen Daten einer Transporteinheit, einen Schreibadressengenerator (8) zur Steuerung des Schreibvorgangs der Daten in den Pufferspeicher (5), eine Steueranordnung (7) zur Bildung eines Steuersignals für den Schreibadressengenerator (8) aus dem Signal, einen Leseadressengenerator (10) zur Steuerung des Lesevorgangs der Daten aus dem Pufferspeicher (5), eine Differenzanordnung (12) zur Bildung von Differenzwerten aus den Adressen von Schreib- und Leseadressengenerator (8, 10) und eine Schaltung (11) zur Erzeugung eines dem Leseadressengenerator (10) zugeführten Lesetaktsignals aus den Differenzwerten. Die Steueranordnung (7) ist weiter zur Ermittlung der Verschiebung wenigstens einer Transporteinheit im Signal und zur Lieferung der ermittelten Verschiebung an eine Korrekturschaltung (9) vorgesehen ist, die zur Bildung der Phasenabweichung zwischen einer untergeordneten Transporteinheit und einer übergeordneten Transporteinheit dient. Eine Kombinationsschaltung (14) ist jeweils zur Kombination eines aus der Subtraktion der beiden Phasenabweichungen gebildeten Korrekturwertes und eines Differenzwertes der Differenzanordnung (12) vorgesehen.

FIG. 7

Die Erfindung bezieht sich auf ein Übertragungssystem mit einem Synchronisierer zur Bildung eines plesiochronen oder synchronen Signals, mit wenigstens einer Vorrichtung zur Weiterleitung des Signals und mit einem Desynchronisierer, der wenigstens

- einen Pufferspeicher zur Zwischenspeicherung von im Signal enthaltenen Daten einer Transporteinheit,
- einen Schreibadressengenerator zur Steuerung des Schreibvorgangs der Daten in den Pufferspeicher,
- eine Steueranordnung zur Bildung eines Steuersignals für den Schreibadressengenerator aus dem Signal,
- einen Leseadressengenerator zur Steuerung des Lesevorgangs der Daten aus dem Pufferspeicher,
- eine Differenzanordnung zur Bildung von Differenzwerten aus den Adressen von Schreib- und Leseadressengenerator und
- eine Schaltung zur Erzeugung eines dem Leseadressengenerator zugeführten Lesetaktsignals aus den Differenzwerten enthält.

Ein solches Übertragungssystem kann ein synchrones oder plesiochrones Signal übertragen. Ein Signal, das in einem plesiochronen Übertragungssystem übertragen wird, kann z.B. mehrere niederbitratige Signale in einem oder mehreren höherbitratigen Signal enthalten (z.B. 64 * 2,048 Mbit/s-Signale in einem 139,264 Mbit/s-Signal). Solche niederbitratigen Signale werden in Transporteinheiten im Rahmen des plesiochronen Signals eingefügt. Bei der Übertragung über digitale Vorrichtungen müssen auf Grund von Taktschwankungen Stopfvorgänge durchgeführt werden, wodurch sich einzelne Transporteinheiten im Rahmen verschieben.

In einem synchronen Übertragungssystem, das ein System der synchronen digitalen Hierachie oder das amerikanische System SONET (Synchronous Optical Network) sein kann, wird die Zusammenfügung, Aufteilung, Abzweigung, Einspeisung oder Umleitung beliebiger Signalbündel ermöglicht. Beispielsweise können die in einem Netzknoten der synchronen digitalen Hierachie einlaufenden plesiochronen Nutzkanalsignalströme (in Europa: 2,048 Mbit/s, 34,368 Mbit/s und 139,264 Mbit/s) mit einer Abbildungsvorschrift (Mapping) so aufbereitet werden, daß sie immer in einem einheitlichen 125 $\mu$s-langen synchronen Transportrahmen (STM-1-Rahmen) als STM-1-Signal mit der Bitrate von 155,52 Mbit/s auf den Übertragungsweg geschickt werden. Ein solcher Netzknoten kann ebenfalls die durch Multiplexbildung von STM-1-Signalen entstehenden höherbitratigen STM-N-Signale (N = 4, 16, ...) empfangen und weiterverarbeiten.

Das STM-1-Signal ist nach Rahmen strukturiert und weist außer den eigentlichen Nutzdaten des Signals, Steuerinformation und Stopfdaten auf. Ein STM-1-Rahmen besteht aus 270 Spalten und 9 Zeilen (pro Zeile 270 Bytes). In den Zeilen 1 bis 3 und 5 bis 9, jeweils in den Spalten 1 bis 9, ist der "Section Overhead" (SOH) für Steuerungs- und Fehlererkennungsinformationen und in dem restlichen Bereich (AU-Nutzdatenbereich = AU-Payload) Daten des Signals, Stopfdaten und weitere Steuerungsinformationen untergebracht.

In dem AU-Nutzdatenbereich können mehrere verschiedene Container (C-4, C-3, C-2, C-12 und C-11) untergebracht sein. Unter einem Container wird die Grundverpackungseinheit für digitale Nutzsignale verstanden. Beispielsweise kann in einem STM-1-Rahmen eine Verwaltungseinheit ("Administrative Unit") AU-4 mit einem Container C-4 für eine Bitrate von 139,264 Mbit/s eingebracht sein. Weiter können drei Verwaltungseinheiten AU-3 in dem STM-1-Rahmen untergebracht sein. Davon enthält z. B. eine Verwaltungseinheit AU-3 einen Container C-3 für eine Bitrate von 44,736 Mbit/s. Die zweite Verwaltungseinheit AU-3 kann beispielsweise 7 "Tributary Unit Groups" TUG-2 mit jeweils einem Container C-2 für eine Bitrate von 6,312 Mbit/s enthalten. In der dritten Verwaltungseinheit AU-3 können ferner 7 TUG-2 mit jeweils 3 Containern C-12 für eine Bitrate von 2,048 Mbit/s eingefügt sein. Aus den Containern werden durch Hinzufügung von Steuerinformationen und Stopfinformationen weitere Transporteinheiten (VC-4, VC-3, TU-3, TU-2, TU-12 und TU-11) gebildet.

Ein synchrones Übertragungssystem enthält in der Regel hierachisch gegliederte Netz- oder Systemebenen (z.B. Ortsnetzebene oder Fernnetzebene). Jede Netzebene umfaßt synchrone digitale Vorrichtungen. Die Taktversorgung der einzelnen synchronen digitalen Vorrichtungen wird durch jeweils zugeordnete Taktversorgungsvorrichtungen gewährleistet. Dabei ist eine Primär-Taktversorgungvorrichtung vorhanden, mit der Sekundär-Taktversorgungsvorrichtungen synchronisiert werden müssen. Eine Synchronisierung kann beispielsweise erreicht werden, indem aus dem STM-1-Signal ein Taktsignal zurückgewonnen wird. Das zurückgewonnene Taktsignal wird mit dem Taktsignal der Sekundär-Taktversorgungsvorrichtung synchronisiert. Diese Synchronisierung des Taktsignals der Sekundär-Taktversorgungsvorrichtung mit dem STM-1-Signal ist dann nicht möglich, wenn z.B. einem privaten Netzbetreiber nur ein im STM-1-Signal eingefügtes plesiochrones 2,048 Mbit/s-Signal zur Verfügung steht. Dann muß dieses 2,048 Mbit/s-Signal zur Synchronisierung verwendet werden.

Bei der Übertragung eines plesiochronen 2,048 MBit/s-Signals über mehrere synchrone digitale Vorrichtungen kommt es zu laufzeitbedingten Phasenverschiebungen zwischen dem in einem Synchronisierer gebildeten STM-1-Signal mit dem 2,048 MBit/s-Signal und dem in einem Desynchronisierer empfangenen STM-1-Signal mit dem 2,048 MBit/s-Signal. Weiter bewirken durch Frequenz- und Phasenschwankungen bedingte pufferfüllstandsabhängige Verschiebungen von Transporteinheiten, die eine Veränderung von wenigstens einem Pointerwert einer Transporteinheit und damit auch Stopfvorgänge hervorrufen, eine zusätzliche Phasenverschiebung des 2,048 Mbit/s-Signals. Die zusätzliche Phasenverschiebung, die, wie oben erwähnt, durch eine Veränderung eines AU-Pointers (bei Verschiebung eines VC-3 oder V-4) oder eines TU-Pointers (bei Verschiebung eines VC-2, VC-12 oder VC-11) angegeben, muß bei der Desynchronisation berücksichtigt werden.

Eine solche Desynchronisation kann beispielsweise mit dem aus der EP-A2-0 435 384 bekannten Desynchronisierer durchgeführt werden. Dieser enthält wenigstens einen Pufferspeicher für ein aus dem STM-1-Signal zu gewinnendes plesiochrones Signal. Der Schreibvorgang in den Pufferspeicher wird durch einen Schreibadressengenerator (Schreibzähler), der von einer Steueranordnung (Vergleichs- und Zähleranordnung) gesteuert wird und ein Schreibtaktsignal von einer Schaltung zur Taktrückgewinnung empfängt, vorgenommen. Den Lesevorgang führt ein Leseadressengenerator (Lesezähler) durch, der ein Lesetaktsignal von einer Kombination aus Stellglied, Sigma-Delta-Modulator und Regler erhält. Dem Regler werden die Differenzwerte der Lese- und Schreibadressen zugeleitet, die in einer Differenzanordnung gebildet werden.

Es hat sich gezeigt, daß bei einer Veränderung des AU-Pointers und bei der Übertragung eines für die Synchronisation verwendeten plesiochronen Signals in einem VC-2, VC-12 oder VC-11 mit einem bekannten Desynchronisierer nicht die im AU-Pointer angegebene Phasenverschiebung im desynchronisierten plesiochronen Signal berücksichtigt werden kann. Das gleiche Problem tritt bei der Übertragung von Signalen in einem plesiochronen System auf.

Der Erfindung liegt daher die Aufgabe zugrunde, ein Übertragungssystem zu schaffen, bei dem eine nicht durch Laufzeitverschiebungen bedingte Phasenverschiebung im desynchronisierten Signal nahezu vollständig zurückgebildet werden kann.

Die Aufgabe wird durch ein Übertragungssystem der eingangs genannten Art dadurch gelöst,
daß die Steueranordnung zur Ermittlung der Verschiebung wenigstens einer Transporteinheit im Signal und zur Lieferung der ermittelten Verschiebung an eine Korrekturschaltung vorgesehen ist, die zur Bildung der Phasenverschiebungen zwischen einer untergeordneten Transporteinheit und einer übergeordneten Transporteinheit dient, und daß eine Kombinationsschaltung jeweils zur Kombination eines aus der Subtraktion der beiden Phasenverschiebungen gebildeten Korrekturwertes und eines Differenzwertes der Differenzanordnung vorgesehen ist.

Bei dem erfindungsgemäßen Übertragungssystem, das z.B. zur Übertragung von Signalen der synchronen digitalen Hierachie vorgesehen ist, wird beispielsweise eine Phasenverschiebung in einer übergeordneten Transporteinheit VC-4, die durch einen AU-Pointerwert angegeben wird, dadurch bei der Gewinnung einer untergeordneten Transporteinheit (z.B. Transporteinheit VC-12 oder Transporteinheit für ein 2,048 Mbit/s-Signal) berücksichtigt, daß ein Korrekturwert mit einem Differenzwert der Differenzanordnung kombiniert wird. Unter einer übergeordneten Transporteinheit ist eine solche zu verstehen, die weitere (untergeordnete) Transporteinheiten enthält. Der Korrekturwert setzt sich einerseits aus der berechneten Phasenverschiebung der untergeordneten Transporteinheit und andererseits aus der berechneten Phasenverschiebung der übergeordneten Transporteinheit (z.B. Transporteinheit VC-4) zusammen. Hierbei wird die Phasenverschiebung der untergeordneten Transporteinheit von der Phasenverschiebung der übergeordneten Transporteinheit subtrahiert. Die jeweiligen Phasenverschiebungen ergeben sich durch Auswertung der Pointerbytes (z.B. Entnahme der TU- oder AU-Pointerwerte aus den Pointerbytes). Auch durch Auswertung der Stopfinformation in den Pointerbytes ergibt sich die Phasenverschiebung. Die Phasenverschiebung bei Transporteinheiten von Signalen in einem plesiochronen Übertragungssystem ergibt sich aus den jeweiligen Stopfbits. Auf Grund dieser Maßnahmen ist es möglich eine Taktsynchronisation einer Sekundär-Taktversorgungsvorrichtung mit einer Primär-Taktversorgungsvorrichtung mittels einer im synchronen Signal (z.B. STM-1-Signal) enthaltenen untergeordneten Transporteinheit (z.B. Transporteinheit VC-12 oder Transporteinheit für ein 2,048 Mbit/s-Signal) durchzuführen

In einer Weiterbildung der Erfindung für ein synchrones Übertragungssystem ist vorgesehen,
daß in der Korrekturschaltung
- eine Berechnung des mittleren Pufferfüllstandes von Daten einer untergeordneten Transporteinheit,
- eine Ermittlung der Phasenverschiebung einer übergeordneten Transporteinheit durch Multiplikation des zugehörigen gewichteten Pointerwertes mit der Rahmendauer des synchronen Signals und der Division durch die Anzahl der Datenbytes der übergeordneten Transporteinheit im Rahmen,

- eine Ermittlung einer mittleren Phasenverschiebung einer untergeordneten Transporteinheit durch Multiplikation des mittleren Pufferfüllstandes und der Rahmendauer des synchronen Signals und der Division durch das Produkt aus der Anzahl der Datenbytes eines Rahmens und der Anzahl der Bytes der untergeordneten Transporteinheit und

- zur Bildung des Korrekturwertes durch Subtraktion der mittleren Phasenverschiebung der untergeordneten Transporteinheit von der Phasenverschiebung der übergeordneten Transporteinheit vorgesehen ist.

Zur Berechnung des mittleren Pufferfüllstandes für einen Pufferspeicher zur Zwischenspeicherung beispielsweise von Datenbytes einer untergeordnetem Transporteinheit des 2,048 Mbit/s-Signals, die in einem synchronen Signal eingefügt sind, werden jeweils die Pointerwerte (z.B. AU-4- und TU-12-Pointerwert) ausgewertet. Durch die Pointerwerte ergibt sich, wann beispielsweise ein Datenbyte einer Transporteinheit für das 2,048 Mbit/s-Signal im synchronen Signal (z.B. STM-1-Signal) erscheint. Nach Nachbildung des Schreib- und Lesevorgangs in den Pufferspeicher, der für die Dauer eines Rahmens gemittelt wird, ergibt sich der Pufferfüllstand. Der mittlere Pufferfüllstand kann bei einem STM-1-Signal für die untergeordneten Transporteinheiten VC-2, VC-12 oder VC-11 oder eines in diesen virtuellen Containern transportierten plesiochronen Signals zur Bildung der mittleren Phasenverschiebung verwendet werden.

Die Phasenverschiebung einer übergeordneten Transporteinheit VC-4 oder VC-3 ergibt sich, indem der dazugehörige gewichtete AU-Pointerwert mit der STM-1-Rahmendauer (125 $\mu$s) multipliziert wird und eine Division erfolgt. Hierbei wird die Anzahl der Datenbytes einer übergeordneten Transporteinheit VC-4 oder VC-3 durch das Multiplikationsergebnis dividiert. Der AU-Pointerwert wird bei einer AU-4 mit dem Wert 3 und bei einer AU-3 mit dem Wert 1 gewichtet.

Die mittlere phasenverschiebung einer Transporteinheit VC-2, VC-12, VC-11 oder eines plesiochronen Signals wird durch Multiplikation des mittleren Pufferfüllstandes mit einem weiteren Faktor berechnet. Der Faktor ergibt sich, indem das Produkt aus der Anzahl der Datenbytes eines STM-1-Rahmens und der Anzahl der Datenbytes der Transporteinheit VC-2, VC-12, VC-11 oder des plesiochronen Signals durch die STM-1-Rahmendauer dividiert wird.

Die Korrekturschaltung kann entweder jeden Korrekturwert aktuell berechnen oder eine Speichertabelle enthalten, die zum Empfang von Pointerwerten als Adressen und zur Abgabe von gespeicherten Korrekturwerten vorgesehen ist. Bei der Aufstellung der Tabelle kann beispielsweise die Zeilenperiodizität des STM-1-Rahmens berücksichtigt werden, wodurch eine Verkleinerung um den Faktor 9 erfolgt.

In der Regel dient die Schaltung zur Erzeugung eines Lesetaktsignals, die wenigstens einen Regler und ein Stellglied enthält und zusammen mit dem Leseadressengenerator und der Differenzanordnung einen Regelkreis bildet, auch zur Mittelwertbildung der Differenzwerte bzw. der daraus abgeleiteten Signale. Falls aber diese Schaltung mit geringerer Lesetaktfrequenz arbeitet (Unterabtastung), sollte zur Vermeidung von Rahmenstruktureinflüssen zwischen Differenzanordnung und Kombinationsschaltung eine Schaltung zur Bildung des Mittelwertes der Differenzwerte über ungefähr einen Rahmen des synchronen Signals oder ein Vielfaches davon vorgesehen sein.

Die Erfindung bezieht sich auch auf einen Desynchronisierer zum Empfang eines plesiochronen oder synchronen Signals. Dieser Desynchronisierer enthält wenigstens

- einen Pufferspeicher zur Zwischenspeicherung von im Signal enthaltenen Daten einer Transporteinheit,
- einen Schreibadressengenerator zur Steuerung des Schreibvorgangs der Daten in den Pufferspeicher,
- eine Steueranordnung zur Bildung eines Steuersignals für den Schreibadressengenerator aus dem Signal,
- einen Leseadressengenerator zur Steuerung des Lesevorgangs der Daten aus dem Pufferspeicher,
- eine Differenzanordnung zur Bildung von Differenzwerten aus den Adressen von Schreib- und Leseadressengenerator und
- eine Schaltung zur Erzeugung eines dem Leseadressengenerator zugeführten Lesetaktsignals aus den Differenzwerten.

Die Steueranordnung ist zur Ermittlung der Verschiebung wenigstens einer Transporteinheit im Signal und zur Lieferung der ermittelten Verschiebung an eine Korrekturschaltung vorgesehen, die zur Bildung der Phasenabweichung zwischen einer untergeordneten Transporteinheit und einer übergeordneten Transporteinheit dient. Ferner ist eine Kombinationsschaltung jeweils zur Kombination eines aus der Subtraktion der beiden Phasenabweichungen gebildeten Korrekturwertes und eines Differenzwertes der Differenzanordnung vorgesehen.

Ein Ausführungsbeispiel der Erfindung wird im folgenden anhand der Figuren näher erläutert. Es zeigen:

Fig. 1        ein synchrones Übertragungssystem,

4

Fig. 2          einen VC-12, der in einem Synchronisierer des synchronen Übertragungssystems nach Fig. 1 gebildet wird,

Fig. 3          einen ebenfalls in dem Synchronisierer nach Fig. 1 zu bildenden VC-4 und die darin einzufügenden VC-12,

Fig. 4          zwei aufeinanderfolgende in dem Synchronisierer nach Fig. 1 gebildete STM-1-Rahmen,

Fig. 5 und 6     jeweils im Synchronisierer nach Fig. 1 erzeugte STM-1-Rahmen und jeweils einen STM-1-Rahmen, der einem Desynchronisierer des synchronen Übertragungssystems nach Fig. 1 zugeführt wird, und

Fig. 7          einen Teil einer im Desynchronisierer des synchronen Übertragungssystems nach Fig. 1 enthaltenen Schaltungsanordnung.

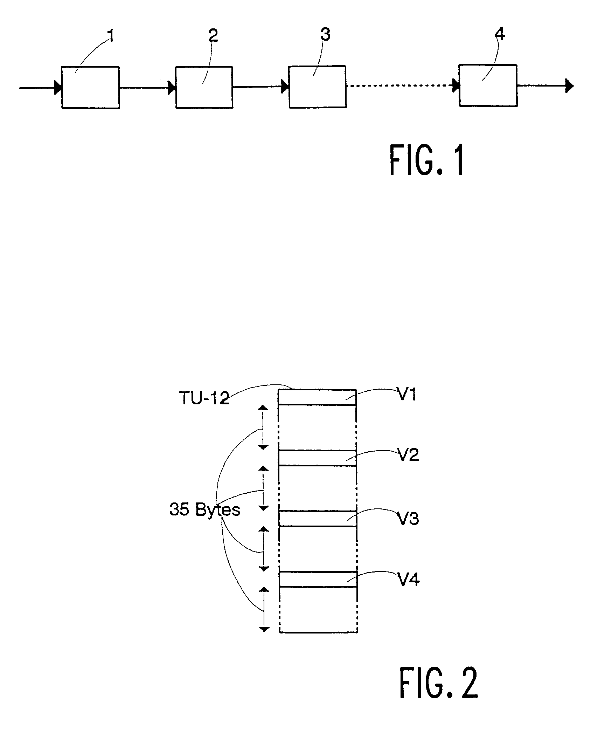

In Fig. 1 ist ein synchrones Übertragungssystem mit mehreren synchronen digitalen Vorrichtungen 1 bis 4 dargestellt, die Signale der synchronen digitalen Hierachie verarbeiten. Beispielsweise werden der als Synchronisierer ausgebildeten Vorrichtung 1 mehrere plesiochrone 2,048 Mbit/s-Signale zugeführt, die in dem Synchronisierer 1 in ein STM-1-Signal eingefügt werden, das einer weiteren synchronen digitalen Vorrichtung 2 geliefert wird. In dem Synchronisierer 1 werden die Bytes eines plesiochronen 2,048 Mbit/s-Signals in jeweils virtuelle Container VC-12 eingepaßt (vgl. CCITT-Empfehlung G.709). Dabei werden zusätzlich zu den Bytes des 2,048 Mbit/s-Signals noch feste und variable Stopfbytes eingefügt. Die variablen Stopfbytes dienen zur Phasen- oder Frequenzanpassung. Aus einem virtuellen Container VC-12 wird eine "Tributary-Unit" TU-12 gebildet. Eine TU-12 weist weitere vier zusätzliche Bytes V1 bis V4 gegenüber einer VC-12 auf.

In Fig. 2 ist der Aufbau eines TU-12 schematisch dargestellt. Die V-Bytes sind jeweils durch 35 Datenbytes getrennt. In den Bytes V1 und V2 ist der Pointerwert enthalten, der den Anfang eines VC-12 angibt. Der Beginn eines VC-12 in einer TU-12 wird durch das V5-Byte gekennzeichnet. Das V3-Byte ermöglicht negativ zu stopfen. Eine TU-12 wird in vier aufeinanderfolgenden STM-1-Rahmen transportiert. Daher beträgt die Dauer für die Übertragung eines TU-12 500 $\mu$s.

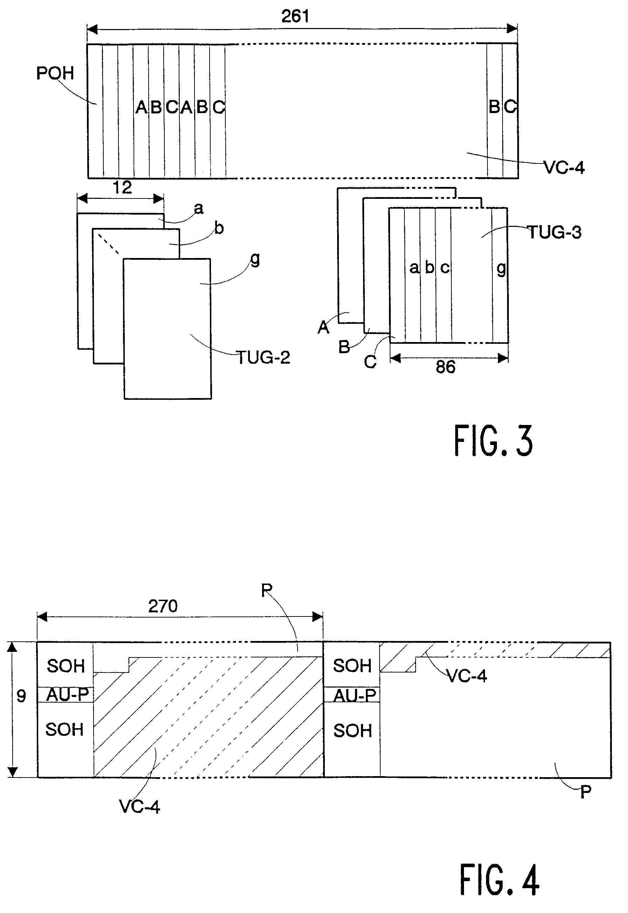

Die Bytes einer TU-12 werden spaltenweise in einer TUG-2 untergebracht. Die 4 Spalten (jeweils 9 Bytes) von 3 TU-12 werden abwechselnd in einer TUG-2 zusammengefügt und sieben TUG-2 zu einem VC-3 oder einer TUG-3 zusammengesetzt. In Fig. 3 ist diese Verschachtelung gezeigt. Jede TUG-2 enthält 12 Spalten (jede Spalte enthält 9 Bytes), die ebenfalls abwechselnd in einer TUG-3 oder VC-3 untergebracht sind. Eine TUG-3, die 86 Spalten (jeweils 9 Bytes) enthält, weist in der ersten Spalte feste Stopfbytes und in den restlichen Spalten Bytes der Transporteinheit TU-12 auf.

Wie Fig. 3 weiter zeigt, werden die Bytes von drei TUG-3 in eine VC-4 eingefügt. Der VC-4 enthält in der ersten Spalte einen "Path Overhead" (POH) und in den beiden folgenden Spalten feste Stopfbytes. Ab der Spalte 4 werden jeweils abwechselnd Spalten der 3 TUG-3 eingefügt.

Die Einfügung eines VC-4 in zwei aufeinanderfolgende STM-1-Rahmen ist in Fig. 4 skizziert. Ein STM-1-Rahmen besteht aus 270 Spalten und 9 Zeilen (pro Zeile 270 Bytes). In den ersten 9 Spalten in den Zeilen 1 bis 3 und 5 bis 9 ist der "Section Overhead" (SOH) und in Zeile 4 der "AU-Pointer" (AU-P) untergebracht. In dem restlichen Bereich (AU-Nutzdatenbereich = P), in den Spalten 10 bis 270, sind Nutzdatenbytes, Stopfbytes und weitere Bytes für Steuerungsinformationen eingefügt. Der AU-Pointer AU-P enhält die Information über das erste Bit eines virtuellen Containers VC-4 bzw. VC-3, Stopfinformationen und weitere Steuerinformationen.

In der Vorrichtung 2 (Fig. 1) findet eine Taktanpassung statt. Hierbei wird ein Stopfvorgang durchgeführt, wodurch sich der virtuelle Container VC-4 verschiebt und der AU-Pointerwert sich verändert. In der Vorrichtung 3 kann ein Ausblenden und Einblenden von 2,048 Mbit/s-Signalen vorgenommen werden. Auch hierbei wird eine Taktanpassung vorgenommen. Wird dabei der TU-12-Pointerwert verändert, so bewirkt das einen Stopfvorgang (Taktanpassung mit TU-12-Pointerbytes.

In der als Desynchronisierer ausgebildeten Vorrichtung 4 soll nun ein 2,048 Mbit/s-Signal wiedergewonnen werden. In dem Desynchronisierer 4 wird dazu das STM-1-Signal aufgelöst und ein plesiochrones 2,048 Mbit/s-Signal gebildet. Um den jeweiligen Anfang eines virtuellen Containers in einer Verwaltungseinheit AU-4 bzw. AU-3 oder "Tributary Unit" TU-2, TU-12 bzw. TU-11 zu ermitteln, muß ein Pointerwert ausgewertet werden. Es hat sich gezeigt, daß durch Stopfvorgänge bedingte Phasenverschiebungen zwischen dem ursprünglichen und dem zu gewinnenden Signal nicht vollständig rückgängig gemacht werden können, wenn der Desynchronisierer 4 nach dem Stand der Technik aufgebaut ist.

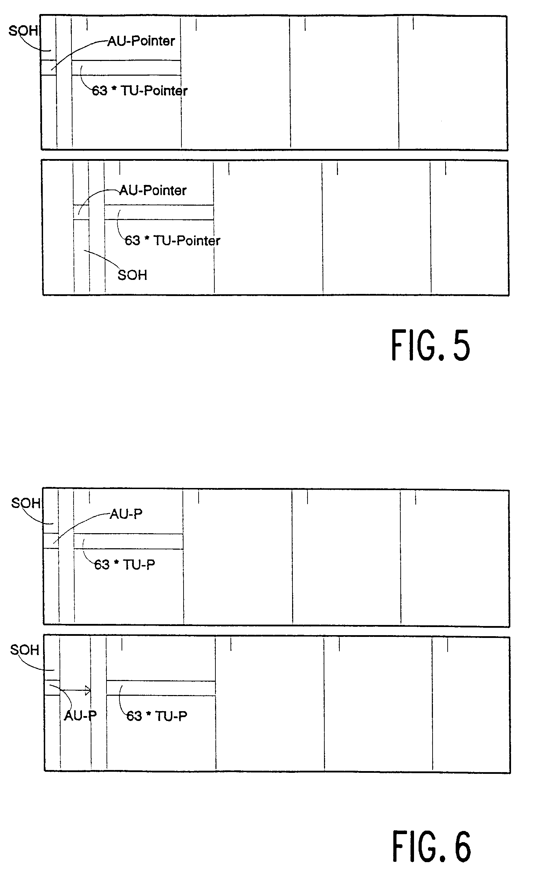

Dies kann anhand der Fig. 5 und 6 näher erläutert werden. In den jeweiligen Figuren ist oben ein von dem Synchronisierer 1 gebildeter STM-1-Rahmen abgebildet, der insgesamt in einem VC-4 63 * VC-12 enthält. Die ersten, zweiten, dritten und vierten Spalten der VC-12 sind jeweils durch einen senkrechten Strich getrennt. Eine beispielhafte Lage von TU-Pointerbytes (TU-Pointer) ist ebenfalls abgebildet. Ein bestimmter Kanal oder eine bestimmte Spalte eines VC-12 ist jeweils durch einen kleinen Strich gekennzeichnet. Den in den jeweiligen Figuren unten abgebildete STM-1-Rahmen empfängt der Desynchronisierer 4.

Der in dem Desynchronisierer 4 empfangene Rahmen nach der Fig. 5 weist nur eine durch Laufzeitverschiebungen verursachte Phasenverschiebung von 18 STM-1-Bytes bei 2430 STM-1-Bytes des STM-1-Rahmens (Rahmendauer: 125 $\mu$s) auf:

$$\frac{18\ \text{Bytes}_{\text{STM-1}}\ *\ 125\ \mu s}{2430\ \text{Bytes}_{\text{STM-1}}} \approx 0,93\ \mu s\ .$$

Wird die Phasenverschiebung auf die VC-12-Bytes (35 Bytes pro STM-1-Rahmen) bezogen, ergibt sich eine mittlere Phasenverschiebung von:

$$\frac{0,26\ \text{Bytes}_{\text{VC-12}}\ *\ 125\ \mu s}{35\ \text{Bytes}_{\text{VC-12}}} \approx 0,93\ \mu s$$

mit

$$\frac{35\ \text{Bytes}_{\text{VC-12}}\ *\ 18\ \text{Bytes}_{\text{STM-1}}}{2430\ \text{Bytes}_{\text{STM-1}}} \approx 0,26\ \text{Bytes}_{\text{VC-12}}\ .$$

Die 0,26 Bytes$_{\text{VC-12}}$ stellen die mittlere Phasenverschiebung oder auch den Pufferfüllstand für die jeweilige Transporteinheit VC-12 dar.

Bei der Desynchronisation würde in diesem Beispiel die Phasenverschiebung auch bei Veränderung des TU-12-Pointerwertes nahezu vollständig zurückgebildet werden.

In Fig. 6 weist das im Desynchronisierer empfangene STM-1-Signal den AU-4-Pointerwert 6 (18 Byte-Verschiebung) auf. Die auf die VC-12-Bytes bezogene mittlere Phasenverschiebung beträgt (vgl. obige Rechnung) $\approx$0,26 VC-12-Bytes ($\approx$0,93 $\mu$s). Es ergibt sich jedoch die richtige mittlere Phasenverschiebung durch Bezugnahme auf die VC-4-Bytes. Diese beträgt 18 VC-4-Bytes:

$$\frac{18\ \text{Bytes}_{\text{VC-4}}\ *\ 125\ \mu s}{2349\ \text{Bytes}_{\text{VC-4}}} \approx 0,96\ \mu s\ .$$

Bei diesem Beispiel wird bei der Desynchronisation zur Bildung eines 2,048 Mbit/s-Signals die Phasenverschiebung nicht korrekt zurückgebildet. Mit Hilfe einer Korrekturschaltung im Desynchronisierer 4 kann die durch Veränderung eines VC-4 oder VC-3 verursachte Phasenverschiebung, die eine Veränderung des AU-Pointerwertes und damit Stopfvorgänge bewirkt, jedoch nahezu vollständig zurückgebildet werden.

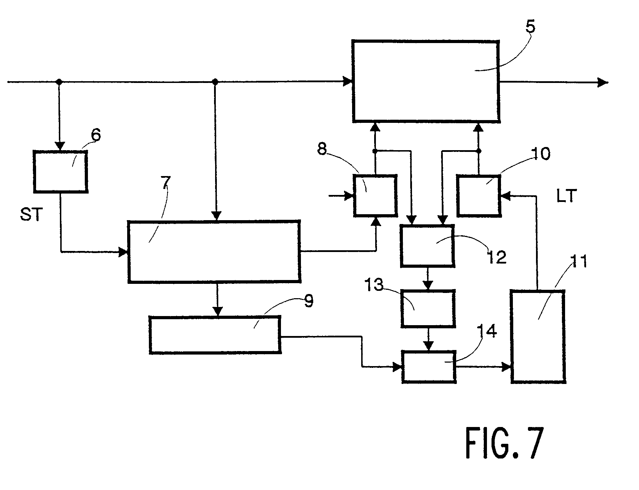

Ein Teil des Desynchronisierers 4 ist in der Fig. 7 gezeigt. Ein Pufferspeicher 5 empfängt beispielsweise Datenbytes eines 2,048 Mbit/s-Signals, dessen Bytes in einer TU-12 eingefügt sind. Die Datenbytes der TU-12 werden in einem STM-1-Signal transportiert, das der Schaltungsanordnung nach Fig. 7 zugeführt wird. Aus dem STM-1-Signal wird mittels einer Schaltung 6 zur Taktrückgewinnung ein Schreibtaktsignal ST mit einer Frequenz von ungefähr 155,52 MHz gewonnen.

Das Schreibtaktsignal wird einer Steueranordnung 7, die Vergleicher und Zähler enthält, und einem Schreibadressengenerator 8, der beispielsweise als Zähler ausgebildet ist, zugeführt. Ein Beispiel für eine Steueranordnung 7 ist in der EP-A2-0 435 384 aufgeführt. Bei der Steueranordnung der oben genannten Europäischen Patentanmeldung werden Steuersignale für einen Zähler erzeugt, der zum Einschreiben von Nutzdatenbytes für einen VC-4 dient. Die Steueranordnung 7 arbeitet auf ähnliche Weise wie die in der EP-A2-0 435 384 beschriebene Steueranordnung und dient zur Steuerung des Schreibvorgangs von Datenbytes eines 2,048 Mbit/s-Signals mittels eines Steuersignals. Außer dem Steuersignal für den Schreibadres-

6

sengenerator 8 gibt die Steueranordnung 7 noch TU-Pointerwerte und AU-Pointerwerte an eine Korrekturschaltung 9.

Den Lesevorgang aus dem Pufferspeicher 5 steuert ein als Zähler realisierter Leseadressengenerator 10, der ein Lesetaktsignal LT mit einer Frequenz von ungefähr 2,048 MHz von einer aus einem Regler und Stellglied dienenden Schaltung 11 erhält. Eine solche Schaltungsanordnung 11 ist ebenfalls aus der EP-A2-0 435 384 bekannt. Die Adressen, die der Schreibadressengenerator 8 und der Leseadressengenerator 10 jeweils erzeugen, werden einer Differenzanordnung 12 zugeführt, die einen Differenzwert bildet, der einem Mittelwertspeicher 13 zugeleitet wird. Der Mittelwertspeicher 13 mittelt die Differenzwerte über ungefähr einen STM-1-Rahmen. Werte von der Korrekturschaltung 9 und von dem Mittelwertspeicher 13 werden in einer Kombinationsschaltung 14 addiert. Die Kombinationsschaltung 14 gibt Werte an die Schaltung 11. Der Mittelwertspeicher 13 ist nur dann erforderlich, wenn die Schaltung 11 mit geringerer Lesetaktfrequenz arbeitet. In diesem Fall wird eine Mittelwertbildung in der Schaltung 11 vorgenommen.

Die Korrekturschaltung 9 kann beispielsweise eine Korrekturtabelle sein, welche die von dem Mittelwertspeicher 13 gemittelten Werte so korrigiert, daß eine durch Taktschwankungen in den digitalen Vorrichtungen 2 und 3 hervorgerufene Verschiebung eines VC-4 oder VC-3 korrigiert werden kann. Die Korrekturschaltung kann auch jeweils den entsprechenden Wert neu berechnen.

Die Bildung der Korrekturtabelle kann auf folgende Art durchgeführt werden:

AU-4-Pointerwert := 0 setzen; (0 ... 782)

TU-Pointerwert := 0 setzen, (0 ... 139)

P-Puffer := 0 setzen;

```
Solange AU-4-Pointerwert < 783 und
TU-12-Pointerwert < 140:
        Setze Mittelwert := 0;
        Führe für Zeile 0 bis 8 folgendes durch:
                Führe für Spalte 0 bis 269 folgendes durch:
                        Inkrementierung des P-Puffers, wenn ein
                        P-Byte eingeschrieben wird;
                        Dekrementierung des P-Puffers, wenn ein
                        P-Byte ausgelesen wird;
                        Mittelwert := Mittelwert + P-Puffer
                Ende
        Ende
        Inkrementierung des AU-4- bzw. des TU-12-Pointers;
        VC-4-Phasenwert := 3 * AU-4-Pointerwert * 125/2349 µs
        P-Phasenwert := Mittelwert * 125/(2430 * 32) µs
        Korrekturwert := VC-4-Phasenwert - P-Phasenwert
Ende
```

Die Korrekturtabelle muß für jeden vorkommenden AU-4- und TU-12-Pointerwert einen Korrekturwert enthalten. Zuerst wird der Pufferfüllstand des Pufferspeichers 5 nachgebildet. Der Pufferfüllstand wird als Mittelwert angegeben. Dabei wird für jedes Byte im STM-1-Rahmen geprüft, ob das jeweilige Byte eingeschrieben und ein gespeichertes Byte ausgelesen wird. Es wird bei dieser Prüfung auch der TU-Pointerwert benötigt, der die Lage des zugeordneten VC-12 angibt. Der Mittelwert ergibt sich also durch jeweilige Addition des zuletzt gebildeten Mittelwertes mit dem Inhalt des P-Puffers. In den P-Puffer werden nur Bytes eines 2,048 Mbit/s-Signals eingeschrieben.

Nach Berechnung des Pufferfüllstandes wird entweder der AU-4-Pointerwert oder der TU-12-Pointerwert inkrementiert. Als Korrekturwert wird das Subtraktionsergebnis zwischen einem VC-4-Phasenwert und einem P-Phasenwert gebildet. Der VC-4-Phasenwert, der die Phasenverschiebung der übergeordneten Transporteinheit VC-4 angibt, ergibt sich durch Multiplikation des dreifachen AU-4-Pointerwertes mit der Dauer eines STM-1-Rahmens (125 $\mu s$) und einer Division. Hierbei wird die Anzahl der VC-4-Bytes durch das Multiplikationsergebnis geteilt. Der P-Phasenwert gibt die mittlere Phasenverschiebung des plesiochronen 2,048 Mbit/s-Signals an.

Die Korrekturtabelle kann eine verminderte Anzahl von Korrekturwerten enthalten, wenn z.B. die Zeilenperiodizität des STM-1-Rahmens berücksichtigt wird.

Werden die Korrekturwerte direkt in der Korrekturschaltung 9 berechnet, die in diesem Fall dann als Prozesssor ausgebildet ist, wird der Programmablauf ähnlich wie oben aufgeführt. Es muß jedoch dann nur für die aktuellen Pointerwerte der Korrekturwert berechnet werden.

**Patentansprüche**

1. Übertragungssystem mit einem Synchronisierer (1) zur Bildung eines plesiochronen oder synchronen Signals, mit wenigstens einer Vorrichtung (2, 3) zur Weiterleitung des Signals und mit einem Desynchronisierer (4), der wenigstens
   - einen Pufferspeicher (5) zur Zwischenspeicherung von im Signal enthaltenen Daten einer Transporteinheit,
   - einen Schreibadressengenerator (8) zur Steuerung des Schreibvorgangs der Daten in den Pufferspeicher (5),
   - eine Steueranordnung (7) zur Bildung eines Steuersignals für den Schreibadressengenerator (8) aus dem Signal,
   - einen Leseadressengenerator (10) zur Steuerung des Lesevorgangs der Daten aus dem Pufferspeicher (5),
   - eine Differenzanordnung (12) zur Bildung von Differenzwerten aus den Adressen von Schreib- und Leseadressengenerator (8, 10) und
   - eine Schaltung (11) zur Erzeugung eines dem Leseadressengenerator (10) zugeführten Lesetaktsignals aus den Differenzwerten enthält,
   dadurch gekennzeichnet,
   daß die Steueranordnung (7) zur Ermittlung der Verschiebung wenigstens einer Transporteinheit im Signal und zur Lieferung der ermittelten Verschiebung an eine Korrekturschaltung (9) vorgesehen ist, die zur Bildung der Phasenverschiebung zwischen einer untergeordneten Transporteinheit und einer übergeordneten Transporteinheit dient, und
   daß eine Kombinationsschaltung (14) jeweils zur Kombination eines aus der Subtraktion der beiden Phasenverschiebungen gebildeten Korrekturwertes und eines Differenzwertes der Differenzanordnung (12) vorgesehen ist.

2. Synchrones Übertragungssystem nach Anspruch 1,
   dadurch gekennzeichnet,
   daß in der Korrekturschaltung (9)
   - eine Berechnung des mittleren Pufferfüllstandes von Daten einer untergeordneten Transporteinheit,
   - eine Ermittlung der Phasenverschiebung einer übergeordneten Transporteinheit durch Multiplikation des zugehörigen gewichteten Pointerwertes mit der Rahmendauer des synchronen Signals und der Division durch die Anzahl der Datenbytes der übergeordneten Transporteinheit im Rahmen,
   - eine Ermittlung einer mittleren Phasenverschiebung einer untergeordneten Transporteinheit durch Multiplikation des mittleren Pufferfüllstandes und der Rahmendauer des synchronen Signals und der Division durch das Produkt aus der Anzahl der Datenbytes eines Rahmens und der Anzahl der Bytes der untergeordneten Transporteinheit und
   - zur Bildung des Korrekturwertes durch Subtraktion der mittleren Phasenverschiebung der untergeordneten Transporteinheit von der Phasenverschiebung der übergeordneten Transporteinheit vorgesehen ist.

3. Synchrones Übertragungssystem zur Übertragung von Signalen der synchronen digitalen Hierachie nach Anspruch 1 oder 2,
   dadurch gekennzeichnet,
   daß in der Korrekturschaltung (9)

- eine Berechnung des mittleren Pufferfüllstandes von Datenbytes einer Transporteinheit VC-2, VC-12, VC-11 oder eines plesiochronen Signals,
- eine Ermittlung der Phasenverschiebung einer Transporteinheit VC-4 oder VC-3 durch Multiplikation des gewichteten AU-Pointerwertes mit der STM-1-Rahmendauer und der Division durch die Anzahl der Datenbytes der übergeordneten Transporteinheit VC-4 oder VC-3,
- eine Ermittlung der mittleren Phasenverschiebung einer Transporteinheit VC-2, VC-12, VC-11 oder eines plesiochronen Signals durch Multiplikation des mittleren Pufferfüllstandes und der STM-1-Rahmendauer und der Division durch das Produkt aus der Anzahl der Datenbytes eines STM-1-Rahmens und der Anzahl der Datenbytes der Transporteinheit VC-2, VC-12, VC-11 oder des plesiochronen Signals und
- zur Bildung des Korrekturwertes durch Subtraktion der mittleren Phasenverschiebung der Transporteinheit VC-2, VC-12, VC-11 oder des plesiochronen Signals von der Phasenverschiebung der Transporteinheit VC-4 oder VC-3 vorgesehen ist.

4. Synchrones Übertragungssystem nach einem der vorhergehenden Ansprüche,
dadurch gekennzeichnet,
daß die Korrekturschaltung (9) eine Speichertabelle enthält, die zum Empfang von Pointerwerten als Adressen und zur Abgabe von gespeicherten Korrekturwerten vorgesehen ist.

5. Synchrones Übertragungssystem nach einem der vorhergehenden Ansprüche,
dadurch gekennzeichnet,
daß zwischen Differenzanordnung (12) und Kombinationsschaltung (14) eine Schaltung (13) zur Bildung des Mittelwertes der Differenzwerte über einen Rahmen des synchronen Signals vorgesehen ist.

6. Desynchronisierer zum Empfang eines plesiochronen oder synchronen Signals mit wenigstens
- einem Pufferspeicher (5) zur Zwischenspeicherung von im Signal enthaltenen Daten einer Transporteinheit,
- einem Schreibadressengenerator (8) zur Steuerung des Schreibvorgangs der Daten in den Pufferspeicher (5),
- einer Steueranordnung (7) zur Bildung eines Steuersignals für den Schreibadressengenerator (8) aus dem Signal,
- einem Leseadressengenerator (10) zur Steuerung des Lesevorgangs der Daten aus dem Pufferspeicher (5),
- einer Differenzanordnung (12) zur Bildung von Differenzwerten aus den Adressen von Schreib- und Leseadressengenerator (8, 10) und
- eine Schaltung (11) zur Erzeugung eines dem Leseadressengenerator (10) zugeführten Lesetaktsignals aus den Differenzwerten enthält,
dadurch gekennzeichnet,
daß die Steueranordnung (7) zur Ermittlung der Verschiebung wenigstens einer Transporteinheit im Signal und zur Lieferung der ermittelten Verschiebung an eine Korrekturschaltung (9) vorgesehen ist, die zur Bildung der Phasenabweichung zwischen einer untergeordneten Transporteinheit und einer übergeordneten Transporteinheit dient, und daß eine Kombinationsschaltung (14) jeweils zur Kombination eines aus der Subtraktion der beiden Phasenabweichungen gebildeten Korrekturwertes und eines Differenzwertes der Differenzanordnung (12) vorgesehen ist.

FIG. 1

FIG. 2

FIG. 3

FIG. 4

FIG. 5

FIG. 6

FIG. 7